# EUROPEAN PATENT SPECIFICATION

(11) **EP 2 930 393 B1**
(45) Date of publication and mention of the grant of the patent: **13.02.2019**
(21) Application number: 13863200.5
(22) Date of filing: 31.05.2013
(51) Int. Cl.: F16F 1/12, B60G 11/14, B60G 11/54, F16F 9/58, B60G 15/06

(54) **UPPER MEMBER FOR SUSPENSION**
AUFHÄNGUNGSELEMENT
ÉLÉMENT SUPÉRIEUR POUR SUSPENSION

(30) Priority: 10.12.2012 JP 2012269467
(43) Date of publication of application: 14.10.2015
(73) Proprietor: Sumitomo Riko Company Limited, Komaki, Aichi (JP)
(72) Inventor: ARAKAWA, Noboru, Komaki-shi, Aichi 485-8550 (JP); SATO, Yuji, Komaki-shi, Aichi 485-8550 (JP); KUWAHARA, Shinya, Komaki-shi, Aichi 485-8550 (JP)
(74) Representative: Müller-Boré & Partner Patentanwälte PartG mbB
(86) International application number: PCT/JP2013/003442
(87) International publication number: WO 2014/091636

(56) References cited:
- JP-A- 2000 130 487
- JP-A- 2008 185 136
- JP-A- 2008 240 774
- JP-A- 2010 007 772
- JP-A- 2010 007 772
- US-A- 4 465 296

## Description

### TECHNICAL FIELD

The present invention relates to, for example, an upper member for a suspension like a spring seat or bump stopper, etc., that is attached to the upper portion of the suspension mechanism that supports the wheels on automobiles, etc.

### BACKGROUND ART

Conventionally, known suspension mechanisms that support wheels include an upper member for a suspension like a spring seat that supports the upper end of a coil spring or a bump stopper that limits the amount of approach displacement of the wheels and vehicle body. This upper member is integrally equipped with a plate-shaped basal end support section that is attached to the upper portion of the suspension mechanism and a distal end cylinder section that projects downward from the basal end support section. For example, the resin seat shown in Japanese Unexamined Patent Publication No. JP-A-2010-007772 (Patent Document 1) is one of these.

Incidentally, because the relative distance between the upper end of the coil spring and the vehicle body and the relative distance between the vehicle body and the bump stopper rubber, etc., are set for each type of vehicle, when those distances are large, the position of the seat for the coil spring and the stopper clearance of the stopper means may be changed by adjusting the thickness of the basal end support section.

Further, as also shown in Patent Document 1, when the basal end support section is made thick, lightening recesses may be formed in the basal end support section for the purpose of reducing weight. It is preferable that these recesses be formed opening onto the upper surface of the basal end support section due to the high degree of freedom in determining its shape.

However, when the recesses are formed opening onto the upper surface of the base end support, it becomes easy for rainwater, etc., to accumulate once installed on the vehicle. And, because the collected water is not drained away, there is the possibility of the basal end support section deteriorating due to corrosion or swelling, etc.

### BACKGROUND ART DOCUMENT

### PATENT DOCUMENT

Patent Document 1: JP-A-2010-007772
US 4 465 296 A discloses an upper support for a wheel suspension assembly of a vehicle having a shock absorber.

### SUMMARY OF THE INVENTION

### PROBLEM THE INVENTION ATTEMPTS TO SOLVE

The present invention was established in view of the above background, and the problem to be solved is to provide an upper member for a suspension with a novel structure that, while limiting penetration of water into the recesses of the basal end support section, can also quickly drain the water that infiltrates the recesses and thus prevent deterioration in durability.

### MEANS FOR SOLVING THE PROBLEM

The first mode of the present invention provides an upper member according to claim 1.

With the upper member given this type of structure according to the first mode, it is possible to easily adjust the position of the seat that receives the coil spring of the suspension mechanism as well as the stopper clearance of the stopper means, etc., by setting a suitable thickness for the basal end support section. And, even if the basal end support section is made thick, the increase in weight and an increase in the amount of the molding material used, etc., can be prevented by forming the recesses, and a lightweight, low cost upper member can thus be realized. In addition, as the recesses are formed between the outer peripheral wall and the inner peripheral wall, sufficient strength is secured in the vertical direction (direction of thickness) of the basal end support section due to the outer peripheral wall and inner peripheral wall.

Here, because the drainage cutouts are formed in the inner peripheral wall and the recesses are connect to the inner hole via those drainage cutouts, any water that enters the recesses is guided to the inner hole through those drainage cutouts and drained through the center hole of the distal end cylinder section that is connected to the inner hole. Thus, deterioration of the basal end support section due to any water that enters the recesses remaining without being drained is avoided and improved durability is achieved.

Furthermore, with a structure wherein the water that enters the recesses is guided to the inner periphery and drained through the inner hole and the center hole, it becomes possible to provide an outer peripheral wall that extends continuously around the circumference. Thereby, while the strength of the basal end support section is more efficiently secured, the penetration of water into the recesses from the exterior is also prevented by the outer peripheral wall. In this way, by adopting the structure related to this embodiment, the penetration of water into the recesses is effectively blocked by the outer peripheral wall and, even if water does enter the recesses, by quickly draining it to the inner periphery through the drainage cutouts formed in the inner peripheral wall, deterioration in durability is avoided.

The second mode of the present invention provides the upper member according to the first mode, wherein at least one reinforcing component that mutually joins the outer peripheral wall and the inner peripheral wall is provided on the basal end support section.

With the second mode, by joining the outer peripheral wall and the inner peripheral wall with those reinforcing components, the strength of the basal end support section can be further heightened.

The third mode of the present invention provides the upper member according to the second mode, wherein the at least one reinforcing component comprises a plurality of reinforcing components provided around the circumference so that the at least one recess comprises a plurality of recesses separated by the reinforcing components between the outer peripheral wall and the inner peripheral wall, and the recesses are all connected to the inner hole via the drainage cutout.

With the third mode, because the outer peripheral wall and the inner peripheral wall are joined at a plurality of locations on the circumference by the reinforcing components, it is possible to further improve the strength of the basal end support section.

Further, because the recesses formed between the outer peripheral wall and the inner peripheral wall are separated and partitioned around the circumference by the reinforcing components, and because those recesses are all connected to the inner hole via the drainage cutouts, even if water enters those recesses, it is quickly drained to the exterior. In addition, those recesses may also, for example, be mutually connected through a circumferential cutout that extends through the reinforcing components and then be connected to the inner hole through a drainage cutout provided on one or more of those recesses, but, ideally, a structure like that in the following fourth embodiment is adopted.

The fourth mode of the present invention provides the upper member according to the third mode, wherein the at least one drainage cutout comprises a plurality of drainage cutouts provided in the inner peripheral wall, and the recesses are connected to the inner hole via the respective drainage cutouts different from one another.

With the fourth mode, by providing the drainage cutout at each inner periphery of the recesses, improvement of the drainage efficiency for each recess is achieved. Ideally, it is preferable for a single drainage cutout to be formed in the circumferential direction in the inner peripheral wall between the reinforcing components that are circumferentially adjacent, and, through this, while securing the strength of the basal end support section, a drainage cutout can be located on the inner periphery of each recess.

The fifth mode of the present invention provides the upper member according to any one of the first to fourth modes, wherein the basal end support section and the distal end cylinder section are integrally formed of resin.

With the fifth mode, integrally forming the basal end support section and the distal end cylinder section of resin not only serves to lighten the weight, it also realizes a reduction in the number of components and improves the ease of manufacture.

The sixth mode of the present invention provides the upper member according to any one of the first to fifth modes, wherein a support rubber elastic body externally fitted onto the distal end cylinder section is overlapped with a bottom surface of the basal end support section, and the support rubber elastic body is arranged such that an upper end of a coil spring of the suspension mechanism that is externally fitted onto the distal end cylinder section is supported by the basal end support section via the support rubber elastic body.

With the sixth mode, by appropriately setting the thickness of the basal end support section, it is possible to easily adjust the position of the seat for the upper end of the coil spring. And, by the support rubber elastic body being situated between the basal end support section and the coil spring, the generation of striking noise or friction noise etc., is prevented.

The seventh mode of the present invention provides the upper member according to any one of the first to sixth modes, wherein a contact section to be in contact with a stopper rubber is provided on a bottom end of the distal end cylinder section, and contact between the contact section and the stopper rubber constitutes a stopper means.

With the seventh mode, it is possible to set the stopper clearance by adjusting the thickness of the basal end support section without changing the shape of the distal end cylinder section that has a large effect on the characteristics of the stopper means. And, even if the basal end support section is made thick, the increase in weight can be reduced by forming the recesses, and any failure that might be caused by the penetration of water into those recesses can be avoided by draining it to the inner periphery through the drainage cutouts.

### EFFECT OF THE INVENTION

With the present invention, recesses are formed on the basal end support section and lightening of the weight of the basal end support section is thus achieved. Those recesses are formed between the outer peripheral wall and the inner peripheral wall, and sufficient strength is secured for the basal end support section by the outer peripheral wall and the inner peripheral wall. Furthermore, while the outer circumferential side of the recesses is separated from the exterior space by the outer peripheral wall that extends around in the circumferential direction, those recesses are also connected to the inner hole through the drainage cutouts formed in the inner peripheral wall, thus preventing the infiltration of water from the exterior space. And, even if water does enter the recesses, it is quickly drained via the drainage cutouts and through the inner hole and the center hole to exterior, thus reducing and avoiding any harmful effect on durability.

### BRIEF DESCRIPTION OF THE DRAWINGS

FIG. 1 is a perspective view of an upper member for a suspension in the form of an upper spring seat as a first embodiment of the present invention.
FIG. 2 is a plan view of the upper spring seat shown in FIG. 1.
FIG. 3 is a cross-section view taken along line 3-3 of FIG. 2 that shows a state of installation on a mounting member.
FIG. 4 is a longitudinal cross-section view of an upper member for a suspension in the form of a bump stopper as a second embodiment of the present invention.

### EMBODIMENTS FOR CARRYING OUT THE INVENTION

The following describes an embodiment of the present invention with reference to the drawings.

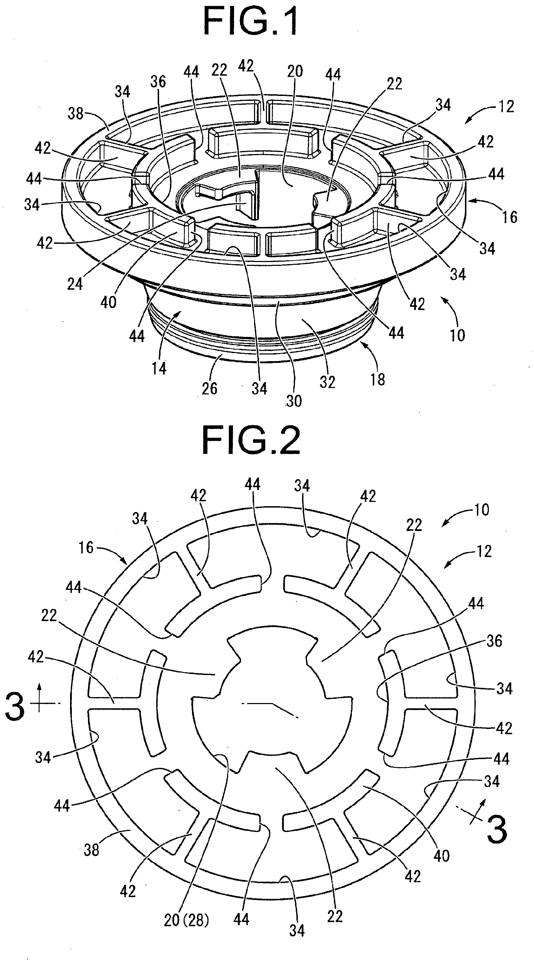

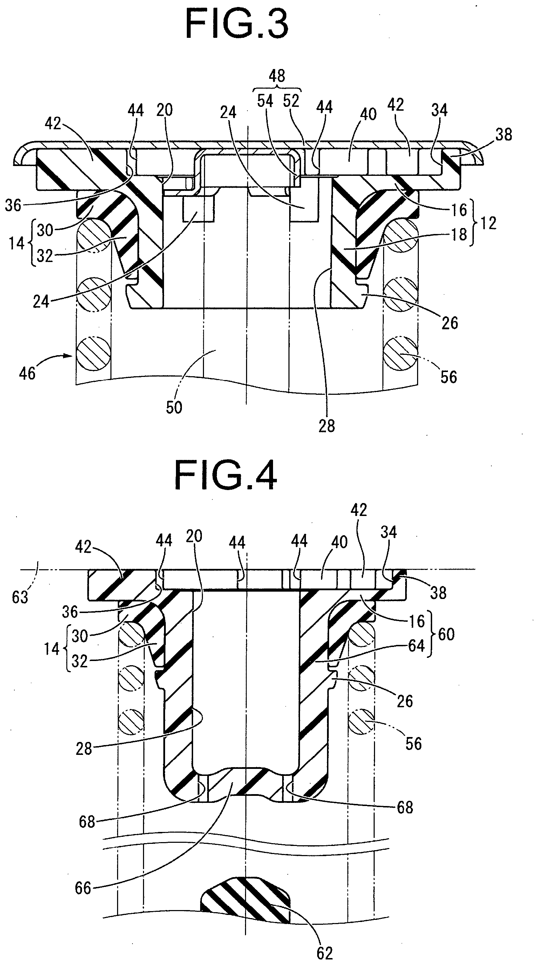

As the first embodiment of an upper member for a suspension that has been given a structure in accordance with the present invention, FIGS. 1 to 3 show an automotive upper spring seat 10. The upper spring seat 10 has a structure wherein a support rubber elastic body 14 is attached to a spring seat body 12. In the following explanation, the "vertical direction" in principle refers to the up-down direction in FIG. 3, which equates to a substantially up-down direction in a state of installation on a vehicle.

In more detail, the spring seat body 12 is a rigid member formed in resin or metal, etc., and is integrally equipped with a plate-shaped basal end support section 16 and a cylindrical-shaped distal end cylinder section 18. And, though the molding material for the spring seat body 12 is not particularly limited, it is preferable that it be resin in order to lighten the weight, for example, any synthetic resin such as polyamide, polyethylene, polypropylene, polystyrene, polyvinyl chloride, polyvinyl acetate resin, ABS resin, polyacetal, polycarbonate, polyethylene terephthalate, poly butylene terephthalate, polyphenylene sulfide can be suitably adopted. More ideally, toward the purpose of improving strength, a fiber-reinforced resin that combines reinforcing material, such as glass fiber or carbon fiber, can be used.

The basal end support section 16 is given a thick, substantially disk shape, and includes an inner hole 20 formed vertically penetrating through its radially center portion. This inner hole 20 is given a partially smaller diameter by locking projections 22 that protrude toward the inner radial direction in three locations around its periphery. A limiting wall 24 is integrally formed extending downward from one edge in the circumferential direction of each locking projection 22.

The distal end cylinder section 18 is substantially cylindrical in shape, and a fall-out prevention projection 26 is integrally formed and protrudes to the outer circumferential side on its bottom end. This distal end cylinder section 18 is integrally formed on the basal end support section 16 and extends downward from the rim of the inner hole 20 on the basal end support section 16. In this way, the inner hole 20 of the basal end support section 16 is mutually connected with a center hole 28 of the distal end cylinder section 18, and the inner hole 20 and the center hole 28 penetrate through vertically and continue in series in the center portion of the spring seat body 12.

The support rubber elastic body 14 is attached to the spring seat body 12, which is provided with the above structure. The support rubber elastic body 14 is a circular rubber elastic body that continues in a circumferential direction with a substantially fixed cross-sectional shape, and is integrally equipped with a substantially annular disk-shaped buffer part 30 and a substantially cylindrical fitting part 32 that projects downward from the inner circumferential end of the buffer part 30. The fitting part 32 in this embodiment is given a tapered surface whose outer circumferential surface becomes gradually smaller in diameter towards the bottom and gets gradually thinner as it goes downward so that a coil spring 56 (described later) is easily fitted externally.

The fitting part 32 is externally press-fit to the distal end cylinder section 18 of the spring seat body 12 in the axial direction between the basal end support section 16 and the fall-out prevention projection 26, and the support rubber elastic body 14 is attached to the spring seat body 12 through the elasticity of the fitting part 32. The buffer part 30 of the support rubber elastic body 14 overlaps with the bottom surface of the basal end support section 16. And, by the support rubber elastic body 14 passing over the fall-out prevention projection 26 through expansion deformation of its diameter and being press-fit into the distal end cylinder section 18, it is prevented from falling out vertically when in a state of installation into the spring seat body 12 through contact with the fall-out prevention projection 26.

The bottom surface of the basal end support section 16, which overlaps with the buffer part 30 of the support rubber elastic body 14, is made substantially flat and has a plurality of recesses 34 open on its upper surface. These recesses 34 are provided in positions at fixed distances on the outer circumferential side of the inner hole 20. Each recess 34 extends in its circumferential direction and these recesses 34 are arranged in series in the circumferential direction. Further, in this embodiment, more toward the inner periphery than the recesses 34, a substantially round center recess 36 is formed that presents a larger diameter in the plan view than the inner hole 20 and opens vertically. The bottom surface of the center recess 36, which is the upper surface of the rim of the inner hole 20, and the bottom surfaces of the recesses 34 are positioned on substantially the same linear plane.

Furthermore, an outer peripheral wall 38, which extends continuously over the entire circumference, is formed on the outer circumferential side of the recesses 34. An inner peripheral wall 40 is formed on the inner periphery of the recesses 34 extending in the circumferential direction, and the recesses 34 and the center recess 36 are separate by the inner peripheral wall 40. Reinforcing walls 42, which serve as reinforcing components that mutually join the outer peripheral wall 38 and the inner peripheral wall 40, are formed around the circumferential direction between adjoining the recesses 34. The outer peripheral wall 38 and the inner peripheral wall 40, made thinner by the formation of the recesses 34, are reinforced by the reinforcing wall 42. By providing a plurality of this kind of the reinforcing walls 42 around the circumference, the circular recess formed radially between the outer peripheral wall 38 and the inner peripheral wall 40 is partitioned in specific lengths in the circumferential direction to form the plurality of recesses 34 that are separated by the reinforcing walls 42. The outer peripheral wall 38, the inner peripheral wall 40, and the reinforcing walls 42 are all integrally formed and mutually integrated on the basal end support section 16.

Here, a plurality of drainage cutouts 44 are formed in the inner peripheral wall 40. The drainage cutouts 44 are recessed cutouts that open upward and extend through the inner peripheral wall 40 in the radial direction at the circumferentially center portion of the recesses 34, and the recesses 34 connect to the center recess 36 and the inner hole 20, which is formed at the center, through those drainage cutouts 44. With this embodiment, the drainage cutout 44 is formed in the circumferentially center portion of each of the recesses 34, and all the recesses 34 are connected to the inner hole 20 via the respective drainage cutouts 44 different from one another. And, the bottom surface of the drainage cutouts 44 in this embodiment is positioned on substantially the same linear plane as the bottom surfaces of the recesses 34 and the center recess 36.

With this type of structure, the upper spring seat 10 is, as shown in FIG. 3, attached to the upper portion of a suspension mechanism 46. In other words, a mounting member 48 on the vehicle body side that comprises the suspension mechanism 46 is attached to the basal end support section 16 from above, and the upper end of the shock absorber 50, which is inserted from below into the center hole 28 of the distal end cylinder section 18, is connected to the mounting member 48, whereby the upper spring seat 10 is attached to the connector portion of a shock absorber 50 and the vehicle body (not illustrated) of the suspension mechanism 46. The concrete structure of the mounting member 48 is not especially limited, but in this embodiment it is equipped with a plate-shaped upper member 52 that overlaps on the upper surface of the basal end support section 16, and with a lower member 54 that is attached to the center portion of the upper member 52 and is fixed to the locking projections 22 by a twist-lock mechanism. It is preferable that an upper mount (not illustrated) is installed between the mounting member 48 and the vehicle body, and the shock absorber 50 serves as the vibration damping connection to the vehicle body.

Further, the upper end of the coil spring 56, which is externally fitted onto the shock absorber 50, is externally fitted onto the fitting part 32 of the support rubber elastic body 14, and is pressed against the basal end support section 16 via the buffer part 30 of the support rubber elastic body 14 so as to be supported by the upper spring seat 10.

When this kind of the upper spring seat 10 is installed on a vehicle, rainwater, etc., can enter into the recesses 34. There, the water that gets into the recesses 34 is guided to the center recess 36 through the drainage cutouts 44, and is drained downward into the upper spring seat 10 via the inner hole 20 that penetrates through the center portion of the bottom wall of the center recess 36 and the center hole 28 of the distal end cylinder section 18 that is connected to the inner hole 20. In this way, because the water that enters the recesses 34 is drained as quickly as possible without remaining in those recesses 34, deterioration such as corrosion and swelling that is caused by contact with water over a long period of time is avoided and improved durability is achieved.

With this embodiment, specifically because the drainage cutouts 44 are formed on the inner peripheral wall 40 of the respective recesses 34 and those recesses 34 are connected to the inner hole 20 via the respective drainage cutouts 44 different from one another, drainage from each recess 34 is separately realized in an efficient manner.

The drainage cutouts 44 are formed in the inner peripheral wall 40, water that enters the recesses 34 is drained to the inner periphery, and the outer peripheral wall 38 extends continuously over the entire circumference. Therefore, even if rainwater, etc., is splashed on the upper spring seat 10 from the outer circumferential side, penetration of water into the recesses 34 is prevented by the outer peripheral wall 38 and, by giving the outer peripheral wall 38 and its long circumferential length a continuous cylindrical shape, better load bearing is realized for the basal end support section 16. In addition, because the height of the outer peripheral wall 38 in this embodiment is substantially regular and the upper end surface is positioned on substantially the same linear plane, it is less likely for a gap to be formed between the outer peripheral wall 38 and the bottom surface of the upper member 52 of the mounting member 48 having a plate shape, so penetration of water into the recesses 34 is even more effectively prevented.

The outer peripheral wall 38 and the inner peripheral wall 40, mutually separated in the radial direction and each extending in the circumferential direction, are joined together by the reinforcing walls 42 extending radially. Each recess 34 is a structure that is surrounded by the outer peripheral wall 38 and the inner peripheral wall 40, and by the reinforcing walls 42 on each side in the circumferential direction. Therefore, sufficient weight reduction for the basal end support section 16 is realized by forming the recesses 34 and, damage to the basal end support section 16 when it is installed on a vehicle is prevented by securing sufficient load bearing performance to a load that is input in the axial direction. And, because the recesses 34 partitioned in specific lengths in the circumferential direction by the reinforcing walls 42, any water that enters the recesses 34 is easily guided into the drainage cutouts 44, so a more efficient drainage effect to the exterior can be expected.

The bottom surface of the recesses 34, the bottom surface of the center recess 36, and the bottom surface of the drainage cutouts 44 are all positioned on substantially the same linear plane, so the boundaries between the drainage cutouts 44 and both the recesses 34 and the center recess 36 are provided continuously on the bottom surface without a difference in levels. Due to this, water flows smoothly from the recesses 34, through the drainage cutouts 44, and into the inner hole 20, and improved drainage efficiency is thus achieved.

An automotive bump stopper 60 is shown in FIG. 4 as the second embodiment of an upper member for a suspension related to the present invention. The bump stopper 60 is attached to the vehicle body, which is the upper portion of the suspension mechanism (not illustrated), and, by contact with a stopper rubber 62, which is attached to the wheels, it constitutes a stopper means that limits the amount of relative approach displacement between the wheels and vehicle body. In the following explanation, for the components and positions that are substantially the same as the first embodiment, the same numbering has been used in the diagram and separate explanations have been omitted. And, the suspension mechanism in this embodiment includes not only suspension members like an arm, etc., and the shock absorbers, but also a connecting section 63 of the vehicle body, etc., for connection to the suspension.

The bump stopper 60 is integrally equipped with the substantially disk-shaped basal end support section 16 and a distal end cylinder section 64 that protrudes downward from the basal end support section 16. The distal end cylinder section 64 in this embodiment has a substantially bottomed cylindrical shape, its bottom wall 66 is arranged in an opposing position and separated vertically by a designated distance in relation to the stopper rubber 62, and the bottom wall 66 comprises the contact section to be in contact with the stopper rubber 62.

Further, a plurality of drain holes 68 that penetrate vertically are formed on the outer circumference of the bottom wall 66 of the distal end cylinder section 64, and the center hole 28 of the distal end cylinder section 64 is connected to the exterior space through the drain hole 68. In this embodiment, because the center portion of the bottom wall 66 of the distal end cylinder section 64 has a upwardly convex longitudinal cross-section that matches the shape of the tip of the stopper rubber 62, the drain hole 68 is formed on the outer circumference of the bottom wall 66 in order to heighten drainage efficiency, but there is no special limitation to the position in which they are formed, the number that are formed, the shape or the size, etc. of the drain holes 68.

With this type of structure, the upper end surfaces of the outer peripheral wall 38, the inner peripheral wall 40, and the reinforcing walls 42 of the bump stopper 60 are, for example as illustrated, all overlapped in a state of contact with the bottom surface of the connecting section 63 of the vehicle body that connects to the suspension substantially over the entire surface and fixedly attached thereto. Even if, when installed on a vehicle, water enters the recesses 34 of the basal end support section 16 that is covered by the connecting section 63 of the vehicle body, the water that is guided into the inner hole 20 through the drainage cutouts 44 is drained to the exterior through the center hole 28 of the distal end cylinder section 64 and the drain hole 68. In this way, deterioration in durability due to water remaining in the recesses 34 is avoided. As is clear from the structure in this embodiment, the distal end cylinder section is not limited to a configuration wherein a center hole penetrates over its whole length. For example, it can be given a bottomed cylindrical shape, and a structure can be adopted wherein the bottom wall and the bottom end of the circumferential wall are equipped with a drain hole that connects to the center hole.

In this embodiment, as shown in FIG. 4, the bump stopper 60 is given a structure wherein the support rubber elastic body 14 is both attached on its upper portion and functions as an upper spring seat that supports the upper end of the coil spring 56, which comprises the suspension mechanism. Thus, it is not necessary to provide a separate upper spring seat, which lightens the weight by reducing the number of components and simplifies the structure.

Embodiments of the present invention are described in detail above, but the present invention is not limited to these concrete descriptions. For example, the number of the recesses 34 is not specially limited; for example, only a single recess 34 extending in the circumferential direction may be formed, or more (or less) recesses 34 than in these embodiments may be formed. In the case that only a single recess 34 is formed, etc., for example, it is possible to reinforce the bottom end of each of the outer peripheral wall 38 and the inner peripheral wall 40 with a rib, etc.

And, when the plurality of recesses 34 are formed, it is not necessarily required that the drainage cutouts 44 be provided at the inner periphery of the respective recesses 34. For example, the recesses 34 may be mutually connected by a circumferential cutout that penetrates through the reinforcing walls 42, with those recesses 34 connected to the inner hole 20 through the same drainage cutout 44.

Further, when the drainage cutouts 44 are provided for the recesses 34, it is not necessarily limited to a structure wherein only a single drainage cutout 44 is formed for each recess 34; a structure may be adopted wherein each recess 34 is connected to the inner hole 20 through the plurality of drainage cutouts 44. In this way, even better drainage efficiency would be realized for in each recess 34, and improved durability, etc., would be achieved through even quick water drainage.

The above-mentioned embodiments illustrated a structure wherein the bottom surface of the recesses 34, the center recess 36, and the drainage cutouts 44 are all made flat and situated mutually on substantially the same linear plane. However, in an example not covered by the present invention, so that the flow of water from the recesses 34 through the drainage cutouts 44 toward the inner hole 20 is generated even more smoothly, it is possible to establish an incline that slants down toward the inner hole 20 on the bottom surfaces of the recesses 34, the center recess 36, and the drainage cutouts 44.

Further, while it is preferable that the boundary between the bottom surface of the drainage cutouts 44 and the bottom surfaces of the recesses 34 and the center recess 36 be connected smoothly, a difference in levels may also be created, in an example not covered by the present invention.

Also, the thickness of the basal end support section 16 and the depth of the recesses 34 and the center recess 36, etc., are suitably established in accordance with the installation position on the vehicle as well as the required strength and maximum acceptable weight, etc., and are thus not especially limited. In the same way, the amount of projection of the distal end cylinder sections, 18 and 64, from the basal end support section 16 can also be set as desired according to the required performance for the vehicle.

The center recess 36 is also not indispensable; for example, the inner hole 20 may be formed adjoining the inner peripheral wall 40, and the edge of the inner periphery of the drainage cutouts 44 may be connected directly to the inner hole 20.

And, when the upper member for a suspension is used as a bump stopper, the stopper body is not necessarily limited to a bottomed cylindrical shape as shown in the second embodiment; for example, it may be given a substantially cylindrical shape and a flange-shaped contact section provided on the bottom end and projecting toward the outer circumferential side.

Furthermore, when the present invention is applied to a bump stopper, it is not limited to a structure that includes an upper spring seat for the coil spring like in the second embodiment. Rather, the upper spring seat can be provided separately from the bump stopper.

### KEY TO SYMBOLS

10: upper spring seat (upper member for a suspension), 14: support rubber elastic body, 16: basal end support section, 18 and 64: distal end cylinder section, 20: inner hole, 28: center hole, 34: recess, 38: outer peripheral wall, 40: inner peripheral wall, 42: reinforcing wall (reinforcing component), 44: drainage cutout, 46: suspension mechanism, 56: coil spring, 60: bump stopper (upper member for a suspension), 62: stopper rubber, 66: bottom wall (contact section), 68: drain hole

## Claims

1. An upper member (10, 60) for a suspension that integrally includes a plate-shaped basal end support section (16) configured to be attached to an upper portion of a suspension mechanism and a distal end cylinder section (18, 64) projecting downward from the basal end support section (16), wherein:
an inner hole (20) is formed vertically penetrating through the basal end support section (16) and is connected to a center hole (28) of the distal end cylinder section (18, 64);
at least one recess (34) is provided that opens onto an upper surface of the basal end support section (16) in a location on an outer circumferential side that is separated from the inner hole (20);
an outer peripheral wall (38) is formed on the outer circumferential side of the recess (34) of the basal end support section (16), and extends continuously in a circumferential direction;
an inner peripheral wall (40) is formed between the inner hole (20) and the recess (34) of the basal end support section (16), and extends in the circumferential direction;
the recess (34) is connected to the inner hole (20) via at least one drainage cutout (44) provided in the inner peripheral wall (40);
the upper member (10, 60) **characterized in that**:
a center recess (36), which is separated from the recess (34) by the inner peripheral wall (40), is formed; and
the bottom surface of the recess (34), the bottom surface of the center recess (36) and the bottom surface of the drainage cutout (44) are positioned on substantially the same linear plane.

2. The upper member (10, 60) according to claim 1, wherein at least one reinforcing component (42) that mutually joins the outer peripheral wall (38) and the inner peripheral wall (40) is provided on the basal end support section (16).

3. The upper member (10, 60) according to claim 2, wherein the at least one reinforcing component (42) comprises a plurality of reinforcing components (42) provided around the circumference so that the at least one recess (34) comprises a plurality of recesses (34) separated by the reinforcing components (42) between the outer peripheral wall (38) and the inner peripheral wall (40), and the recesses (34) are all connected to the inner hole (20) via the drainage cutout (44).

4. The upper member (10, 60) according to claim 3, wherein the at least one drainage cutout (44) comprises a plurality of drainage cutouts (44) provided in the inner peripheral wall (40), and the recesses (34) are connected to the inner hole (20) via the respective drainage cutouts (44) different from one another.

5. The upper member (10, 60) according to any one of claims 1-4, wherein the basal end support section (16) and the distal end cylinder section (18, 64) are integrally formed of resin.

6. The upper member (10, 60) according to any one of claims 1-5, wherein a support rubber elastic body (14) externally fitted onto the distal end cylinder section (18, 64) is overlapped with a bottom surface of the basal end support section (16), and the support rubber elastic body (14) is arranged such that an upper end of a coil spring (56) of the suspension mechanism that is externally fitted onto the distal end cylinder section (18, 64) is supported by the basal end support section (16) via the support rubber elastic body (14).

7. The upper member (60) according to any one of claims 1-6, wherein a contact section (66) to be in contact with a stopper rubber (62) is provided on a bottom end of the distal end cylinder section (64), and contact between the contact section (66) and the stopper rubber constitutes a stopper means.

## Patentansprüche

1. Ein oberes Element (10, 60) für eine Aufhängung, das einen plattenförmigen Basalende-Stützabschnitt (16) integral beinhaltet, der konfiguriert ist, um an einem oberen Abschnitt eines Aufhängungsmechanismus befestigt zu werden, und einen Distalende-Zylinderabschnitt (18, 64), der ausgehend vom Basalende-Stützabschnitt (16) nach unten ragt, wobei:
ein Innenloch (20) auf eine Weise gebildet ist, dass es vertikal durch den Basalende-Stützabschnitt (16) hindurchragt und mit einem Mittelloch (28) des Distalende-Zylinderabschnitts (18, 64) verbunden ist;
mindestens eine Aussparung (34) bereitgestellt wird, die sich auf eine obere Oberfläche des Basalende-Stützabschnitts (16) an einer Stelle auf einer äußeren Umfangsseite öffnet, die vom Innenloch (20) getrennt ist;
eine äußere Umfangswand (38) an der äußeren Umfangsseite der Aussparung (34) des Basalende-Stützabschnitts (16) gebildet ist und kontinuierlich in Umfangsrichtung verläuft;
eine innere Umfangswand (40) zwischen dem Innenloch (20) und der Aussparung (34) des Basalende-Stützabschnitts (16) gebildet ist und in Umfangsrichtung verläuft;
die Aussparung (34) mit dem Innenloch (20) über mindestens einen in der inneren Umfangswand (40) bereitgestellten Ablaufausschnitt (44) verbunden ist;
das obere Element (10, 60) **dadurch gekennzeichnet ist, dass:**
eine mittlere Aussparung (36) ausgebildet ist, die durch die innere Umfangswand (40) von der Aussparung (34) getrennt ist; und **dass**
die Bodenfläche der Aussparung (34), die Bodenfläche der mittleren Aussparung (36) und die Bodenfläche des Ablaufausschnitts (44) auf im Wesentlichen der gleichen linearen Ebene angeordnet sind.

2. Das obere Element (10, 60) nach Anspruch 1, wobei mindestens eine Verstärkungskomponente (42), die die äußere Umfangswand (38) und die innere Umfangswand (40) miteinander verbindet, am Basalende-Stützabschnitts (16) vorgesehen ist.

3. Das obere Element (10, 60) nach Anspruch 2, wobei die mindestens eine Verstärkungskomponente (42) eine Vielzahl von Verstärkungskomponenten (42) umfasst, die um den Umfang herum bereitgestellt werden, sodass die mindestens eine Aussparung (34) eine Vielzahl von Aussparungen (34) umfasst, die durch die Verstärkungskomponenten (42) zwischen der äußeren Umfangswand (38) und der inneren Umfangswand (40) getrennt sind, und wobei die Aussparungen (34) alle über den Ablaufausschnitt (44) mit dem Innenloch (20) verbunden sind.

4. Das obere Element (10, 60) nach Anspruch 3, wobei der mindestens eine Ablaufausschnitt (44) eine Vielzahl von Ablaufausschnitten (44) umfasst, die in der inneren Umfangswand (40) bereitgestellt werden, und wobei die Aussparungen (34) über die jeweiligen voneinander unterschiedlichen Ablaufausschnitte (44) mit dem Innenloch (20) verbunden sind.

5. Das obere Element (10, 60) nach irgendeinem der Ansprüche 1 - 4, wobei der Basalende-Stützabschnitt (16) und der Distalende-Zylinderabschnitt (18, 64) integral aus Harz gebildet sind.

6. Das obere Element (10, 60) nach irgerndeinem der Ansprüche 1 - 5, wobei ein elastischer Stützgummikörper (14), der außen auf dem Distalende-Zylinderabschnitt (18, 64) angebracht ist, mit einer Bodenfläche des Basalende-Stützabschnitts (16) überlappt ist, und wobei der elastische Stützgummikörper (14) so angeordnet ist, dass ein oberes Ende einer Schraubenfeder (56) des Aufhängemechanismus, die außen auf dem Distalende-Zylinderabschnitt (18, 64) angebracht ist, durch den Basalende-Stützabschnitt (16) über den elastischen Stützgummikörper (14) getragen wird.

7. Das obere Element (60) nach irgendeinem der Ansprüche 1 - 6, wobei ein Kontaktabschnitt (66) zum Kontakt mit einem Stoppergummi (62) an einer Bodenfläche des Distalende-Zylinderabschnitts (64) bereitgestellt wird, und wobei der Kontakt zwischen dem Kontaktabschnitt (66) und dem Stoppergummi ein Stoppermittel darstellt.

## Revendications

1. Un élément supérieur (10, 60) pour une suspension qui inclut intégralement une section de support d'extrémité basale (16) en forme de plaque configurée pour être fixée à une partie supérieure d'un mécanisme de suspension, et une section de cylindre d'extrémité distale (18, 64) saillant vers le bas à partir de la section de support d'extrémité basale (16), sachant que :
un trou intérieur (20) est formé de manière à pénétrer verticalement à travers la section de support d'extrémité basale (16) et qu'il est relié à un trou central (28) de la section cylindrique d'extrémité distale (18, 64) ;
au moins un évidement (34) est fourni qui s'ouvre sur une surface supérieure de la section de support d'extrémité basale (16) en un emplacement sur un côté circonférentiel extérieur qui est séparé du trou intérieur (20) ;
une paroi périphérique extérieure (38) est formée sur le côté circonférentiel extérieur de l'évidement (34) de la section de support d'extrémité basale (16) et s'étend de manière continue dans une direction circonférentielle ;
une paroi périphérique intérieure (40) est formée entre le trou intérieur (20) et l'évidement (34) de la section de support d'extrémité basale (16) et s'étend dans la direction circonférentielle;
l'évidement (34) est relié au trou intérieur (20) par l'intermédiaire d'au moins une découpe de drainage (44) fournie dans la paroi périphérique intérieure (40) ;
l'élément supérieur (10, 60) est **caractérisé en ce que** :
un évidement central (36), qui est séparé de l'évidement (34) par la paroi périphérique intérieure (40), est formé ; et **que**
la surface de fond de l'évidement (34), la surface de fond de l'évidement central (36) et la surface de fond de la découpe de drainage (44) sont positionnées sur essentiellement le même plan linéaire.

2. L'élément supérieur (10, 60) d'après la revendication 1, sachant qu'au moins un élément de renforcement (42) qui relie mutuellement la paroi périphérique extérieure (38) et la paroi périphérique intérieure (40) est prévu sur la section de support d'extrémité basale (16).

3. L'élément supérieur (10, 60) d'après la revendication 2, sachant que l'au moins un élément de renforcement (42) comprend une pluralité d'éléments de renforcement (42) fournis autour de la circonférence de sorte que l'au moins un évidement (34) comprend une pluralité d'évidements (34) séparés par les éléments de renforcement (42) entre la paroi périphérique extérieure (38) et la paroi périphérique intérieure (40), et que les évidements (34) sont tous reliés au trou intérieur (20) par la découpe de drainage (44).

4. L'élément supérieur (10, 60) d'après la revendication 3, sachant que l'au moins une découpe de drainage (44) comprend une pluralité de découpes de drainage (44) fournies dans la paroi périphérique intérieure (40), et que les évidements (34) sont reliés au trou intérieur (20) via les découpes de drainage (44) respectives différentes les unes des autres.

5. L'élément supérieur (10, 60) d'après l'une quelconque des revendications de 1 à 4, sachant que la section de support d'extrémité basale (16) et la section de cylindre d'extrémité distale (18, 64) sont formées intégralement de résine.

6. L'élément supérieur (10, 60) d'après l'une quelconque des revendications de 1 à 5, sachant qu'un corps élastique en caoutchouc de support (14) monté extérieurement sur la section de cylindre d'extrémité distale (18, 64) est superposé à une surface de fond de la section de support d'extrémité basale (16), et que le corps élastique en caoutchouc de support (14) est agencé de sorte qu'une extrémité supérieure d'un ressort spiral (56) du mécanisme de suspension, qui est monté extérieurement sur la section de cylindre d'extrémité distale (18, 64), soit soutenue par la section de support d'extrémité basale (16), via le corps élastique en caoutchouc de support (14).

7. L'élément supérieur (10, 60) d'après l'une quelconque des revendications de 1 à 6, sachant qu'une section de contact (66) destinée à être en contact avec un caoutchouc de butée (62) est fournie sur une extrémité de fond de la section cylindrique d'extrémité distale (64), et qu'un contact entre la section de contact (66) et le caoutchouc de butée constitue un moyen de butée.
